# FASCICULE DE BREVET EUROPEEN

(11) **EP 2 562 654 B1**
(45) Date de publication et mention de la délivrance du brevet: **22.10.2014**
(21) Numéro de dépôt: 12180104.7
(22) Date de dépôt: 10.08.2012
(51) Int. Cl.: G06F 15/173, G06F 15/80, G06F 15/78

(54) **Réseau sur puce extensible**
Ausweitbares Kommunikationsnetz auf Chip
Extensible network-on-chip

(30) Priorité: 23.08.2011 FR 1157471
(43) Date de publication de la demande: 27.02.2013
(73) Titulaire: Kalray, 91400 Orsay (FR)
(72) Inventeur: Harrand, Michel, 38120 SAINT EGREVE (FR)
(74) Mandataire: de Jong, Jean Jacques

(56) Documents cités:
- US-A- 5 689 661
- US-A1- 2011 058 569
- KOUADRI M A M ET AL: "Networks-In-Package: Performances management and design methodology", VLSI DESIGN, AUTOMATION AND TEST, 2008. VLSI-DAT 2008. IEEE INTERNATIONAL SYMPOSIUM ON, IEEE, PISCATAWAY, NJ, USA, 23 avril 2008 (2008-04-23), pages 140-143, XP031272455, ISBN: 978-1-4244-1616-5

## Description

### Domaine technique de l'invention

L'invention est relative aux matrices de processeurs intégrées, dans lesquelles les processeurs sont interconnectés par des réseaux sur puce (« NoC »). L'invention concerne plus particulièrement une architecture de matrice de processeurs ayant une régularité telle que les outils de programmation peuvent s'adapter au nombre de processeurs de la matrice avec une assistance minimale du programmateur.

### État de la technique

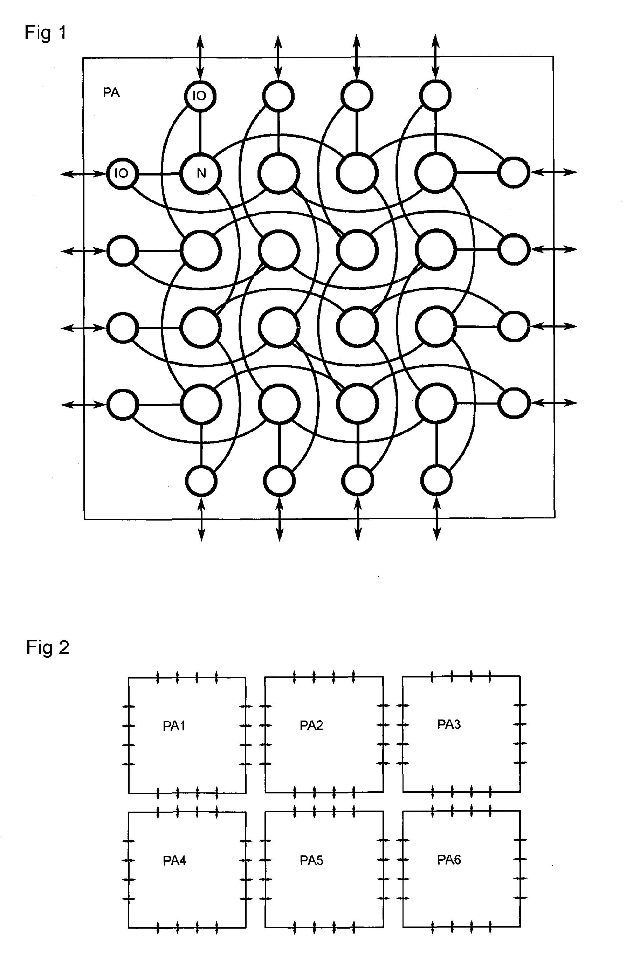

La figure 1 représente schématiquement une matrice de processeurs PA comprenant 4x4 noeuds de calcul N agencés dans un réseau sur puce de topologie torique repliée, telle que décrite dans la demande de brevet US 20110058569. Dans une topologie matricielle, chaque noeud est relié à deux autres noeuds de la même rangée et à deux autres noeuds de la même colonne, par des liaisons point à point bidirectionnelles. Dans une topologie torique, les noeuds de la matrice sont en outre reliés en boucle dans chaque rangée et dans chaque colonne, de sorte que tous les noeuds ont la même structure physique quant à leurs interconnexions, notamment les noeuds situés aux bords de la matrice. Dans une topologie repliée, qui est celle représentée en figure 1, chaque noeud (sauf s'il est situé en bord de matrice) est relié à deux autres noeuds de même parité dans la rangée et dans la colonne, de sorte que les liaisons entre les noeuds aient sensiblement la même longueur.

Chaque noeud N comprend un routeur à cinq voies qui gère les quatre liaisons, dites Nord, Sud, Est et Ouest, vers les noeuds suivants dans la rangée et la colonne, et une liaison avec un module de calcul, constitué par exemple d'une grappe de processeurs interconnectés par un bus parallèle.

La matrice de processeurs PA est réalisée dans un seul circuit intégré. Afin de communiquer avec l'extérieur, elle comprend des modules d'entrée/sortie IO insérés dans le réseau sur puce aux bords de la matrice. Comme cela est représenté, on peut prévoir un tel module IO à chaque extrémité de chaque colonne et de chaque rangée. Plus spécifiquement, chaque module est inséré dans la liaison reliant les deux noeuds N extrémaux d'une même rangée ou d'une même colonne.

Chaque module IO comporte un routeur à trois voies qui gère les deux liaisons avec les noeuds N et une liaison avec une interface d'entrée/sortie. L'interface d'entrée/sortie permet une communication avec l'extérieur du circuit par des bornes métalliques du circuit intégré, destinées à être mises en contact avec des pistes conductrices d'un circuit imprimé ou autre substrat.

Pour faciliter la programmation d'une telle matrice de processeurs, tous les noeuds de calcul N ont des caractéristiques similaires, ce qui permet à un outil de développement de mapper des tâches, en mode automatique, sur n'importe lequel des noeuds. Pour cela, les modules IO sont conçus pour être transparents aux communications purement internes au réseau sur puce. La demande de brevet US 20110058569 décrit en outre une solution permettant de réduire la latence au passage des routeurs des modules IO pour les communications internes.

Dans le cadre d'une commercialisation de circuits intégrés standard, la taille de la matrice de processeurs serait proposée dans une gamme relativement restreinte. Ainsi, la puissance de calcul délivrée par la plus grande matrice de la gamme pourrait s'avérer insuffisante pour certaines applications.

### Résumé de l'invention

On souhaite donc disposer de plus de puissance de calcul que celle délivrée par la plus grande matrice de processeurs d'une gamme. On souhaite en outre pouvoir augmenter cette puissance de calcul sans affecter les outils de développement de programmes pour les matrices de processeurs.

On tend à satisfaire ces besoins en prévoyant un circuit intégré selon la revendication 1.

### Description sommaire des dessins

Des modes de réalisation seront exposés plus en détail dans la description suivante, faite à titre non limitatif en relation avec les figures jointes parmi lesquelles :
- la figure 1, précédemment décrite, représente une matrice de processeurs interconnectés par un réseau sur puce de topologie torique repliée ;
- la figure 2 illustre une macro-matrice réalisée à partir de matrices de processeurs;
- la figure 3 illustre une interconnexion souhaitable entre deux matrices adjacentes de la macro-matrice permettant une extension de réseau en préservant la topologie ;
- la figure 4 représente un mode de réalisation de modules d'extension de réseau ; et
- la figure 5 représente un autre mode de réalisation de modules d'extension de réseau.

### Description d'un mode de réalisation préféré de l'invention

La figure 2 illustre une solution envisageable pour augmenter la puissance de calcul disponible lorsque celle fournie par une seule matrice de processeurs, sous la forme d'un circuit intégré standard, est insuffisante. Comme cela est représenté, plusieurs matrices de processeurs PA1, PA2... sont assemblées sur un substrat, tel qu'un circuit imprimé, en une macro-matrice de taille suffisante pour atteindre la puissance de calcul requise.

Chaque matrice PA pourrait être programmée et utilisée de manière indépendante, mais cela impliquerait des efforts de la part du programmeur pour scinder les tâches à effectuer en des sous-tâches indépendantes et équilibrées en termes de puissance de calcul. Il faudrait en outre exécuter un système d'exploitation en dehors des matrices pour répartir les sous-tâches entre les matrices, alors qu'une matrice est normalement programmée pour exécuter son propre système d'exploitation et être de ce fait autosuffisante.

Pour éviter cette complexité, on souhaite que la macro-matrice puisse être considérée, du point de vue de l'outil de programmation, comme une matrice de processeurs unique. Pour cela, il convient que les noeuds de calcul de toutes les matrices PA forment ensemble un réseau unique.

Une solution envisageable pour cela est de relier les matrices PA entre elles par leurs interfaces d'entrée/sortie et d'émuler des liaisons réseau bidirectionnelles entre les interfaces de deux matrices adjacentes. Une telle émulation implique néanmoins une complexité logicielle supplémentaire qui dépend de la taille et du nombre de matrices formant la macro-matrice.

En outre, cette solution nécessiterait que les interfaces d'entré/sortie soient toutes identiques et que les extrémités de toutes les rangées et colonnes soient munies de telles interfaces d'entré/sortie. En pratique, une matrice de processeurs standard aurait un nombre limité d'interfaces d'entrée/sortie, et celles-ci seraient de natures différentes.

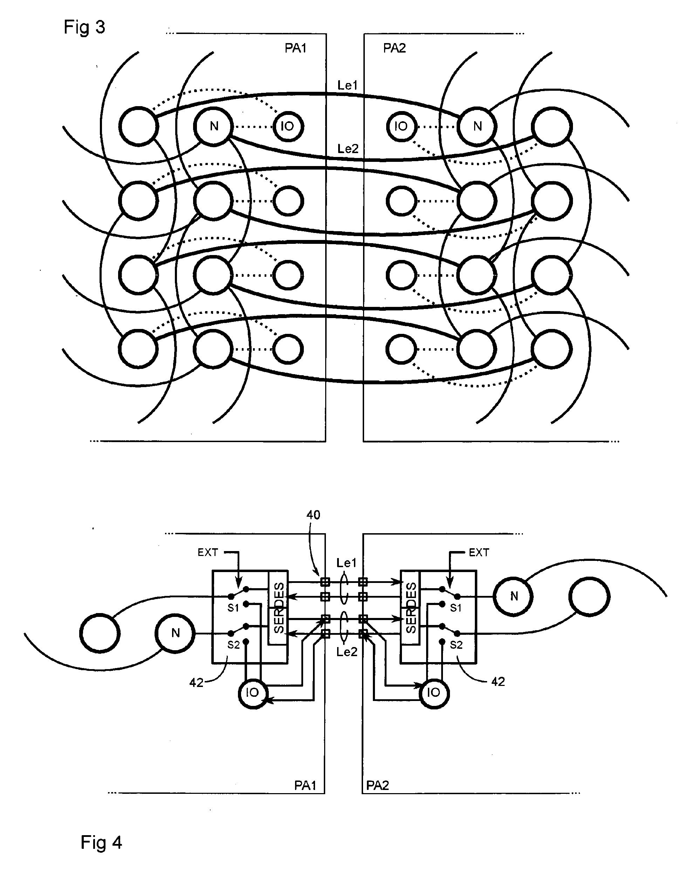

La figure 3 illustre, dans le cadre de matrices à topologie torique repliée, le type de connexion souhaité entre deux matrices adjacentes, PA1 et PA2, pour que les réseaux sur puce des deux matrices n'en forment qu'un, de même topologie. L'exemple représenté correspond à l'extension du réseau par l'intermédiaire des rangées des matrices - on notera que le même principe s'applique aux colonnes.

Le brevet US 5,689,661 décrit une structure semblable pour des matrices de processeurs d'un ordinateur parallèle.

Dans la topologie torique repliée de la figure 3, chaque rangée de la matrice PA1, les liaisons des deux derniers noeuds N avec leur module d'entrée/sortie IO sont ouvertes (dans le cas où il n'y a pas de module IO à cet endroit, c'est la liaison entre les deux derniers noeuds qui est ouverte). De même, dans la rangée homologue de la matrice PA2, les liaisons des deux premiers noeuds N avec leur module d'entrée/sortie IO sont ouvertes (dans le cas où il n'y a pas de module IO à cet endroit, c'est la liaison entre les deux premiers noeuds qui est ouverte). Les liaisons internes ainsi ouvertes, représentées en pointillés, sont remplacées par des liaisons externes Le1 et Le2, assurant une jonction d'une rangée de la matrice PA1 avec une rangée homologue de la matrice PA2 de sorte à former une rangée étendue de même topologie que les rangées internes. Pour cela, la liaison Le1 relie l'avant dernier noeud de la rangée de la matrice PA1 au premier noeud de la rangée de la matrice PA2, et la liaison Le2 relie le dernier noeud de la rangée de la matrice PA1 au deuxième noeud de la rangée de la matrice PA2.

Dans une réalisation pratique, chaque liaison interne ainsi « remplacée » par une liaison externe est coupée en deux segments rendus accessibles de l'extérieur de manière indépendante. Ainsi, la liaison interne entre les deux noeuds extrémaux d'une rangée, passant le cas échéant par un module d'entrée/sortie IO, est coupée en deux segments à relier aux segments homologues du circuit adjacent, respectivement par les liaisons externes Le1 et Le2.

On remarque que la topologie torique repliée est particulièrement bien adaptée à cette extension. En effet, les deux noeuds affectés par les liaisons externes dans chaque rangée d'une matrice s'avèrent être les noeuds les plus proches du bord.

On remarque en outre que les modules IO des bords en regard des matrices PA1 et PA2 ne sont plus utilisés. Cela est conforme à la volonté de créer une macro-matrice de même topologie que les matrices individuelles, où les modules IO se trouvent à la périphérie.

On peut ainsi étendre les rangées et les colonnes sur plusieurs circuits PA juxtaposés, selon une configuration où les rangées et colonnes étendues ont la même topologie, torique repliée, que les rangées et colonnes d'un circuit PA individuel.

Une macro-matrice ainsi formée peut être programmée à l'aide du même outil de développement que celui d'une matrice PA classique. En effet, compte tenu de la régularité de la matrice classique et de l'interchangeabilité des noeuds N, l'outil de développement n'a besoin de connaître que les dimensions de la matrice pour mapper de manière automatisée des tâches à exécuter sur les différents noeuds et construire un schéma de communication entre les noeuds par l'intermédiaire du réseau sur puce. Dans le cas d'une macro-matrice conservant sur son ensemble la topologie d'une matrice classique, il suffit de paramétrer l'outil de développement avec les dimensions de la macro-matrice, en nombre de noeuds de calcul.

La figure 4 représente un mode de réalisation détaillé d'une structure pour établir les liaisons externes Le1 et Le2 entre deux rangées de deux matrices adjacentes PA1 et PA2. Habituellement les liaisons internes entre les noeuds N sont réalisées par des bus constitués de nombreux conducteurs. Il n'est pas envisageable d'étendre ces bus par des liaisons externes Le1 et Le2 comportant autant de conducteurs, car les circuits intégrés incorporant les matrices ne pourraient pas disposer de suffisamment de bornes de contact externes dans la plupart des cas. Pour éviter cette complication, chaque liaison externe Le1, Le2 est prévue sous la forme d'une liaison série rapide. En fait, comme les liaisons internes sont bidirectionnelles, chaque liaison externe Le1, Le2 est formée de deux liaisons série de sens opposés, comme cela est représenté. Chaque liaison externe Le1, Le2 requiert alors seulement deux bornes 40 sur chaque circuit intégré PA. Ces bornes pourront éventuellement être empruntées aux interfaces d'entrée/sortie IO inutilisées, comme cela est représenté pour la liaison Le2.

En disposant judicieusement les bornes 40, c'est-à-dire de manière que les bornes à interconnecter de deux circuits PA adjacents soient face à face, les circuits PA pourront être placés près l'un de l'autre pour raccourcir au maximum les pistes conductrices servant aux liaisons série entre les circuits PA. Du fait que les pistes sont courtes (de l'ordre du millimètre), et que l'on ne cherche pas à réaliser des interfaces série standard, on pourra atteindre des fréquences de transmissions série particulièrement élevées, de l'ordre de la dizaine de Gb/s.

Par ailleurs, chaque extrémité des rangées et des colonnes d'une matrice PA est munie d'un module d'extension 42. Le module 42 comprend un convertisseur série/parallèle/série (SERDES) pour chaque liaison externe Le1, Le2 - il convertit des données parallèles internes en un flot série sur la liaison série sortante, et des données sur la liaison série entrante en un flot parallèle interne. Les flots parallèles transitent par des commutateurs S1, S2, associés respectivement aux liaisons externes Le1, Le2. Les commutateurs S1 et S2 sont commandés par un signal d'extension de réseau EXT.

Lorsque le signal EXT est inactif, le module 42 est en mode normal. Les commutateurs S1 et S2 relient les deux noeuds N extrémaux à leur module d'entrée/sortie IO, dans une configuration classique de matrice PA utilisée de façon isolée. Dans le cas où il n'y a pas de module IO, celui-ci est remplacé par une liaison directe entre les commutateurs S1 et S2.

Lorsque le signal EXT est actif, le module 42 est en mode d'extension de réseau. Les commutateurs S1 et S2 relient les noeuds extrémaux à leurs convertisseurs SERDES respectifs, mettant les circuits PA dans la configuration de la figure 3.

Le signal EXT est de préférence commun à tous les modules d'extension 42 d'un même bord du circuit PA. On prévoit ainsi quatre signaux EXT par circuit PA, permettant de commander indépendamment les modules d'extension 42 de chaque bord du circuit, en fonction de l'emplacement du circuit PA dans la macro-matrice. Les états des signaux EXT sont stockés, par exemple, dans un registre de configuration programmable de l'extérieur.

Bien que l'on puisse réaliser des liaisons série rapides entre deux circuits PA adjacents, elles ne pourront en pratique pas atteindre le débit des liaisons parallèles internes. Ainsi, le réseau étendu présente une limitation de bande passante à chaque passage entre deux circuits PA, de sorte que les performances atteintes par la macro-matrice ne sont pas proportionnelles au nombre de circuits PA.

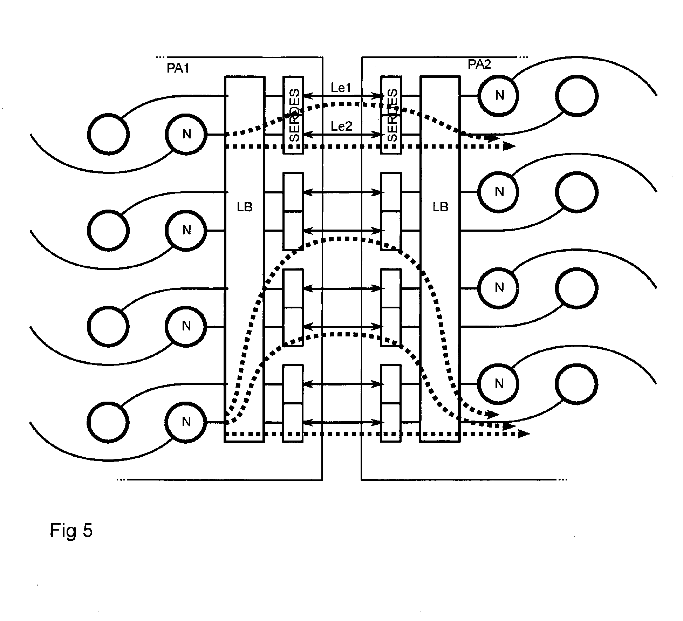

La figure 5 représente un mode de réalisation permettant d'augmenter la bande passante moyenne au passage entre deux circuits PA. Dans cette figure, les modules 42 sont représentés dans leur mode d'extension - on n'a pas représenté les éléments utilisés dans le mode normal, notamment les modules IO, pour des raisons de clarté. Ce mode de réalisation vise à optimiser l'usage des liaisons externes et est issu du principe que la bande passante utile est souvent inégalement répartie entre les liaisons, notamment entre les liaisons sortantes. On prévoit ainsi de répartir de manière dynamique la bande passante des canaux série sortants entre les transmissions sortantes. Pour chaque rangée (ou colonne), on dispose de deux canaux série sortants sur le même bord du circuit, associés respectivement aux liaisons externes Le1 et Le2. Si un circuit PA comporte M rangées (ou colonnes), on dispose de 2M canaux série sortants sur un bord du circuit.

Les commutateurs S1 et S2 de tous les modules d'extension 42 d'un bord de la matrice sont remplacés par un répartiteur de charge LB qui se charge de commuter les flux parallèles sortants vers un ou plusieurs convertisseurs SERDES, selon la disponibilité des canaux série sortants.

Dans l'exemple de la figure 5, une transmission sortant par la liaison Le2 de la première rangée emprunte en parallèle le canal sortant disponible de la liaison Le1. La répartition de charge s'effectue par exemple par paquets : certains paquets venant du noeud supérieur droit du circuit PA1 empruntent la liaison Le1 tandis que d'autres empruntent la liaison Le2.

On a représenté en outre une transmission sortant par la liaison Le2 de la quatrième rangée qui emprunte en parallèle les canaux sortants des liaisons Le2 des deuxième et troisième rangées.

Une transmission série s'effectue généralement par paquets. Chaque canal série comporte alors une queue de transmission dans laquelle sont empilés les paquets à transmettre. La détermination des canaux série allouables à la répartition de charge peut, par exemple, être effectuée en utilisant les niveaux de remplissage des queues des canaux série : un paquet sortant sera aiguillé vers la queue la moins pleine au moment de son arrivée dans le répartiteur de charge.

On vient de décrire une moitié de la fonction de répartition de charge, réalisée par le circuit PA émetteur de données (PA1). L'autre moitié de la fonction est réalisée par le répartiteur de charge LB du circuit PA récepteur des données (PA2). Le répartiteur de charge du circuit émetteur, c'est-à-dire celui (PA1) qui a alloué les canaux série sortants, identifie les transmissions en cours et leurs liaisons internes d'origine. Le répartiteur de charge du circuit récepteur (PA2) reçoit l'information d'identification et redirige les canaux série entrants vers les liaisons internes identifiées.

Les informations d'identification peuvent être insérées dans des entêtes à inclure dans les transmissions série, conformément à des protocoles de transmission série normalisés, comme le protocole Interlaken.

Si le circuit récepteur PA2 a des données à transmettre au circuit émetteur PA1, la transmission est effectuée en inversant les rôles décrits des circuits PA1 et PA2. Les transmissions dans un sens et dans l'autre empruntant des canaux série distincts, les deux transmissions peuvent être effectuées en même temps et de manière indépendante.

En utilisant un répartiteur de charge LB opérant de manière dynamique comme on vient de l'expliquer, on s'aperçoit qu'on peut très bien prévoir moins de canaux série bidirectionnels que de liaisons internes. Dans certaines applications, il peut s'avérer suffisant de prévoir, par exemple, un canal série bidirectionnel pour deux ou quatre liaisons internes. Cela permet de réduire le nombre de bornes externes du circuit, et surtout de réduire la surface occupée par les convertisseurs SERDES. Le répartiteur de charge opèrera de la même manière que décrite ci-dessus ; il disposera seulement de moins de canaux série à allouer.

Des modes de réalisation de réseaux sur puce extensibles par l'extérieur ont été présentés dans le cadre d'une extensibilité illimitée d'une matrice de processeurs tout en maintenant une compatibilité avec des outils de développement conçus pour des circuits individuels, qu'il suffit de paramétrer avec la taille de la matrice étendue.

Il n'est pas exclu que les outils de développement évoluent pour prendre en compte les spécificités des liaisons externes entre circuits. Dans ce cas, plutôt que d'utiliser un répartiteur de charge pour aiguiller les paquets sortants de manière dynamique vers les canaux série, les canaux série peuvent être alloués de manière statique à la programmation, à l'aide d'informations de routage placés dans les entêtes des paquets. Le répartiteur de charge est alors remplacé par un routeur qui aiguille les paquets vers les canaux série en fonction des informations dans les entêtes.

## Revendications

1. Circuit intégré comprenant :
• des noeuds de calcul (N) disposés en matrice ;
• un réseau sur puce de topologie torique interconnectant les noeuds de calcul par des liaisons sous forme de bus parallèles ; et
• un module d'extension de réseau (42) à chaque extrémité de chaque rangée ou colonne de la matrice, inséré dans le bus entre deux noeuds de calcul, le module d'extension ayant un mode normal établissant la continuité du bus entre les deux noeuds de calcul correspondants, et un mode d'extension où le bus est coupé en deux segments indépendants ;
**caractérisé en ce qu'**il comprend :
• un ensemble de convertisseurs parallèle/série (SERDES) formant chacun un canal série sortant pour transmettre en série par une première borne externe respective (40) du circuit des données présentées en parallèle sur les conducteurs d'un segment ;
• un ensemble de convertisseurs série/parallèle formant chacun un canal série entrant pour transmettre en parallèle sur les conducteurs d'un segment des données arrivant en série sur une deuxième borne respective (40) du circuit ; et
• un répartiteur de charge (LB) commun aux modules d'extension d'un même bord de la matrice, configuré pour répartir les canaux série sortants disponibles entre les segments pour lesquels une transmission sortante est en cours.

2. Circuit intégré selon la revendication 1, dans lequel lesdites bornes (40) du circuit sont, en mode normal, connectées à des interfaces d'entrée/sortie (IO) disposées dans des liaisons entre noeuds de calcul aux extrémités des rangées et des colonnes.

3. Circuit intégré selon la revendication 1, dans lequel le répartiteur de charge est prévu pour insérer dans un entête de chaque transmission série sortante une identification du segment d'origine.

4. Circuit intégré selon la revendication 3, dans lequel le répartiteur de charge est prévu pour exploiter l'entête de chaque transmission série entrante pour rediriger le canal série correspondant vers le segment identifié dans l'entête.

5. Circuit intégré selon la revendication 1, dans lequel les canaux série transmettent des données par paquets et comprennent des queues de paquets en attente de transmission, le répartiteur de charge étant prévu pour aiguiller les paquets vers les canaux série ayant les queues les moins pleines.

## Patentansprüche

1. Integrierte Schaltung umfassend:
• Rechenknoten (N), die als Matrix angeordnet sind;
• ein Netzwerk-on-Chip-System mit einer Ringstruktur, bei dem die Rechenknoten über Verbindungen in Form von parallelen Bussen zusammengeschaltet sind; und
• ein an jedem Ende jeder Zeile oder Spalte der Matrix angeordnetes Netzwerkerweiterungsmodul (42), das im Bus zwischen zwei Rechenknoten eingefügt ist, wobei das Erweiterungsmodul einen Normalmodus umfasst, der die Kontinuität des Busses zwischen den zwei entsprechenden Rechenknoten herstellt, und einen Erweiterungsmodus, bei dem der Bus in zwei unabhängige Segmente geteilt ist;
**dadurch gekennzeichnet, dass** sie folgendes umfasst:
• einen Satz Parallel-Seriell-Umsetzer (SERDES), die jeweils einen seriellen Ausgangskanal bilden, um auf die Leiter eines Segments parallel vorgestellte Daten über einen jeweiligen ersten externen Anschluss (40) der Schaltung in Serie zu übertragen;
• einen Satz Seriell-Parallel-Umsetzer, die jeweils einen seriellen Eingangskanal bilden, um an einem zweiten jeweiligen Anschluss (40) der Schaltung in Serie ankommende Daten auf die Leiter eines Segments parallel zu übertragen; und
• einen den Erweiterungsmodulen eines selben Matrixrandes gemeinsamen Lastverteiler (LB), der konfiguriert ist, um die verfügbaren seriellen Ausgangskanäle zwischen den Segmenten, bei denen eine ausgehende Übertragung im Gange ist, zu verteilen.

2. Integrierte Schaltung nach Anspruch 1, bei der die Anschlüsse (40) der Schaltung im Normalmodus mit Eingangs-/Ausgangsschnittstellen (IO) verbunden sind, die in Verbindungen zwischen Rechenknoten an den Zeilen- und Spaltenenden angeordnet sind.

3. Integrierte Schaltung nach Anspruch 1, bei der der Lastverteiler dazu vorgesehen ist, einen Identifizierer des Ursprungssegments in einem Kopfsegment jeder ausgehenden seriellen Übertragung einzufügen.

4. Integrierte Schaltung nach Anspruch 3, bei der der Lastverteiler dazu vorgesehen ist, das Kopfsegment jeder eingehenden seriellen Übertragung zu nutzen, um den entsprechenden seriellen Kanal zu dem im Kopfsegment identifizierten Segment umzuleiten.

5. Integrierte Schaltung nach Anspruch 1, bei der die seriellen Kanäle Daten in Paketen übertragen und Warteschlangen mit Paketen umfassen, die auf die Übertragung warten, wobei der Lastverteiler dazu vorgesehen ist, die Pakete zu den seriellen Kanälen mit den am wenigsten vollen Warteschlangen zu leiten.

## Claims

1. An integrated circuit comprising:
• compute nodes (N) arranged in an array;
• a torus topology network-on-chip interconnecting the compute nodes through parallel bus links; and
• a network extension unit (42) at each end of each row or column of the array, inserted in the bus between two compute nodes, the extension unit having a normal mode establishing the continuity of the bus between the two corresponding compute nodes, and an extension mode dividing the bus in two independent bus segments;
**characterized in that** it comprises:
• a set of parallel/series converters (SERDES) forming each an outgoing serial channel for transmitting in series on a first respective external terminal (40) of the circuit data presented in parallel on a bus segment;
• a set of series/parallel converters forming each an incoming serial channel for transmitting in parallel on a bus segment data arriving in series on a second respective external terminal (40) of the circuit; and
• a load balancer (LB) common to the extension units of a same edge of the array, configured to allocate available outgoing serial channels between the bus segments for which an outbound transmission is in progress.

2. The integrated circuit of claim 1, wherein said terminals (40) of the circuit are, in normal mode, connected to input/output interfaces (IO) located on links between compute nodes at the ends of the rows or columns.

3. The integrated circuit of claim 1, wherein the load balancer is configured to insert in a header of each outgoing serial transmission an identifier of the originating bus segment.

4. The integrated circuit of claim 3, wherein the load balancer is configured to parse each incoming serial transmission header and switch the corresponding serial channel to the bus segment identified in the header.

5. The integrated circuit of claim 1, wherein the serial channels transmit data by packets and include queues for packets awaiting transmission, the load balancer being configured to route packets to the serial channels having the least full queues.
